# EUROPEAN PATENT APPLICATION

(11) **EP 4 635 750 A1**
(43) Date of publication of application: **22.10.2025**
(21) Application number: 23903036.4
(22) Date of filing: 28.08.2023
(51) Int. Cl.: B60C 9/20, B60C 9/06, B60C 9/08, B60C 9/22, D07B 1/06

(54) **MOTORCYCLE TIRE**

(30) Priority: 14.12.2022 JP 2022199193
(71) Applicant: BRIDGESTONE CORPORATION, Chuo-ku Tokyo 104-8340 (JP)
(72) Inventor: NISHIDA, Atsushi, Tokyo 104-8340 (JP); YAMASAKI, Yusuke, Tokyo 104-8340 (JP)
(74) Representative: Marks & Clerk LLP
(86) International application number: PCT/JP2023/031037
(87) International publication number: WO 2024/127732

(57) **Abstract**

To provide a motorcycle tire that is suppressed in the occurrence of buckling during running to achieve an enhancement in braking performance without any loss of steering stability and ride comfort performance. A motorcycle tire including a spiral belt 2 in which a carcass 1 striding between paired bead portions 13 and extending in a toroid manner serves as a skeleton and a belt cord is formed outside in a tire radial direction of the carcass with being wound in a spiral manner in a tire circumferential direction. Not only a stress-strain curve of the belt cord taken out from the tire has an inflection point P_{V} in the strain range of 0.20 to 0.90%, but also a ratio E_{VH}/E_{VL} of an elastic modulus E_{VH} in a high-elastic modulus region of more than the inflection point P_{V} to an elastic modulus E_{VL} in a low-elastic modulus region of the inflection point P_{V} or less, with respect to the belt cord taken out from the tire, is 2.0 to 8.0.

## Description

### TECHNICAL FIELD

The present invention relates to a motorcycle tire (hereinafter, also simply referred to as "tire"), specifically relates to a motorcycle tire associated with improvement of a belt cord used in a spiral belt, particularly relates to a motorcycle pneumatic tire.

### BACKGROUND ART

Conventionally, there have been used as belts that reinforce tread surface portions of motorcycle tires, two or more tilted belt layers placed so that cord directions are mutually crossed between the layers, or one or more spiral belts made of rubber-covered cords wound in a spiral manner in the tire circumferential direction.

In particular, as a prior art relating to a motorcycle tire with a spiral belt, for example, Patent Document 1 discloses a motorcycle pneumatic radial tire with, as a reinforcement material of a spiral belt layer, a steel cord where the amount of elongation in the change in additive load and the difference in additive load in the change in amount of elongation satisfy predetermined conditions. An object of the technique described in Patent Document 1 is to provide a motorcycle pneumatic radial tire that is enhanced in rolling steering performance (cornering properties) without any loss of each tire performance such as straight running performance, high-speed performance, ride comfort, and uniformity.

### RELATED ART DOCUMENT

### PATENT DOCUMENT

[Patent Document 1] JP 2007-191096 A

### SUMMARY OF THE INVENTION

### PROBLEMS TO BE SOLVED BY THE INVENTION

It is important in motorcycle tires to achieve uniform ground contact of tread surface portions during running in order to achieve favorable braking performance.

However, motorcycle tires have sometimes deteriorated in braking performance because the variation in ground contact pressure on ground contact surfaces is caused to make the ground contact pressure ununiform, due to the occurrence of a phenomenon called buckling where cords in such tires are lost in straightness due to deformation by reception of the compression force in the tire circumferential direction, on ground contact surfaces of tread surface portions with the ground, during braking. Such a circumstance has not been studied also with respect to the tire disclosed in Patent Document 1.

An object of the present invention is to provide a motorcycle tire that is suppressed in the occurrence of buckling during running to achieve an enhancement in braking performance without any loss of steering stability and ride comfort performance.

### MEANS FOR SOLVING THE PROBLEMS

The present inventors have made intensive studies, and as a result, have found that the above problems can be solved by specifying the values of physical properties of a belt cord used in a spiral belt of a motorcycle tire, to predetermined values, leading to completion of the present invention.

Specifically, the present invention is as follows.
(1) A motorcycle tire including a spiral belt in which a carcass striding between paired bead portions and extending in a toroid manner serves as a skeleton and a belt cord is formed outside in a tire radial direction of the carcass with being wound in a spiral manner in a tire circumferential direction, wherein
   not only a stress-strain curve of the belt cord taken out from the tire has an inflection point P_{V} in the strain range of 0.20 to 0.90%,
   but also a ratio E_{VH}/E_{VL} of an elastic modulus E_{VH} in a high-elastic modulus region of more than the inflection point P_{V} to an elastic modulus E_{VL} in a low-elastic modulus region of the inflection point P_{V} or less, with respect to the belt cord taken out from the tire, is 2.0 to 8.0.
(2) The motorcycle tire according to (1), wherein the stress-strain curve of the belt cord not covered with rubber before vulcanization has an inflection point P_{U} in the strain range of 1.60 to 2.20%.
(3) The motorcycle tire according to (1) or (2), wherein not only the stress-strain curve of the belt cord not covered with rubber before vulcanization has an inflection point P_{U}, but also a ratio E_{UH}/E_{UL} of an elastic modulus E_{UH} in a high-elastic modulus region of more than the inflection point P_{U}, to an elastic modulus E_{UL} in a low-elastic modulus region of the inflection point P_{U} or less, with respect to the belt cord not covered with rubber before vulcanization, is 20 to 32.
(4) The motorcycle tire according to any of (1) to (3), wherein the elastic modulus E_{VL} in the low-elastic modulus region, with respect to the belt cord taken out from the tire, is 30 to 65 GPa.
(5) The motorcycle tire according to any of (1) to (4), wherein the belt cord is formed by twisting a plurality of steel filaments, and a twisting pitch in the belt cord not covered with rubber before vulcanization is 5.2 to 8.8 mm.
(6) The motorcycle tire according to any of (1) to (5), wherein a diameter of the belt cord not covered with rubber before vulcanization is 0.59 to 0.71 mm.
(7) The motorcycle tire according to any of (1) to (6), wherein the belt cord is formed by twisting a plurality of shaped steel filaments, and a shaping height of the steel filaments in the belt cord not covered with rubber before vulcanization is 0.70 to 0.80 mm.

Here, in the present invention, the elastic moduli E_{VL} and E_{UL} in the low-elastic modulus region are each defined as the minimum value of the slope of a stress-strain curve in the strain range of 0.05 to 1.0%. In addition, in the present invention, the elastic moduli E_{VH} and E_{UH} in the high-elastic modulus region are each defined as the maximum value of the slope of a stress-strain curve in the strain range of more than 1.0%. Furthermore, in the present invention, the inflection points P_{V} and P_{U} are defined respectively as the points corresponding to the intermediate elastic moduli between the elastic moduli E_{VL} and E_{UL} in the low-elastic modulus region and the elastic moduli E_{VH} and E_{UH} in the high-elastic modulus region.

### EFFECTS OF THE INVENTION

According to the present invention, the above configuration is adopted to make it possible to realize a motorcycle tire that is suppressed in the occurrence of buckling during running to achieve an enhancement in braking performance without any loss of steering stability and ride comfort performance.

### BRIEF DESCRIPTION OF THE DRAWINGS

[FIG. 1] A width-direction cross-sectional view illustrating one example of the motorcycle tire of the present invention.
[FIG. 2] A width-direction cross-sectional view illustrating one configuration example of the belt cord used in the spiral belt in the present invention.
[FIG. 3] A graph (schematic view) representing one example of a stress-strain curve of the belt cord.

### MODE FOR CARRYING OUT THE INVENTION

Hereinafter, embodiments of the present invention are described with reference to the drawings.

The compounds and materials disclosed herein may be partially or completely derived from fossil resources, biological resources such as plant resources, or recyclable resources such as end-of-life tires. They may also be derived from mixtures of two or more of fossil resources, biological resources and recyclable resources.

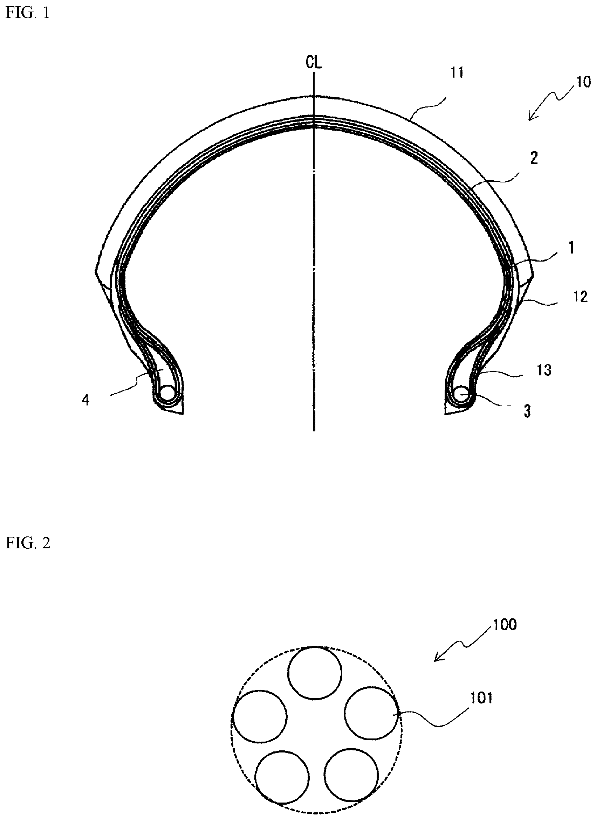

FIG. 1 is a width-direction cross-sectional view illustrating one example of the motorcycle tire of the present invention. A motorcycle tire 10 illustrated includes a tread portion 11 annularly formed, and paired sidewall portions 12 and bead portions 13 sequentially arranged inside in the tire radial direction. The motorcycle tire 10 illustrated includes a spiral belt 2 where a carcass 1 striding between the paired bead portions 13 and extending in a toroid manner serves as a skeleton and a belt cord is formed outside in the tire radial direction with being wound in a spiral manner in the tire circumferential direction.

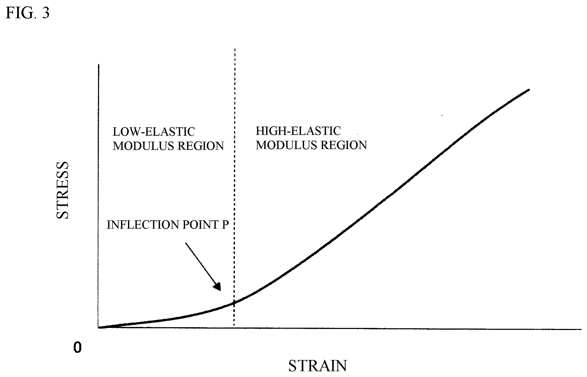

It is important in the motorcycle tire of the present invention to use one having predetermined physical properties, as the belt cord used in the spiral belt 2. FIG. 3 represents a graph (schematic view) of one example of a stress-strain curve of the belt cord. The stress-strain curve illustrated has an inflection point P, and represents a relatively low elastic modulus in a low-elastic modulus region from the origin point to the inflection point P and a relatively high elastic modulus in a high-elastic modulus region beyond the inflection point P. The elastic modulus mentioned here means the tensile elastic modulus.

In the present invention, specifically, not only a stress-strain curve of the belt cord taken out from the tire has an inflection point P_{V} in the strain range of 0.20 to 0.90%, but also a ratio E_{VH}/E_{VL} of an elastic modulus E_{VH} in a high-elastic modulus region of more than the inflection point P_{V} to an elastic modulus E_{VL} in a low-elastic modulus region of the inflection point P_{V} or less, with respect to the belt cord taken out from the tire, is 2.0 to 8.0. A belt cord having such physical properties has been used as the spiral belt 2, thereby providing a motorcycle tire that is suppressed in the occurrence of buckling during running by making the ground contact pressure on the ground contact surface uniform, to achieve an enhancement in braking performance without any loss of steering stability and ride comfort. In addition, the occurrence of buckling can be suppressed to also obtain the effect of allowing the tire to be enhanced in road surface followability and enhanced in grip.

In the present invention, the position of the inflection point P_{V} needs to be present in the strain range of 0.20 to 0.90% and is preferably present in the strain range of 0.35 to 0.45% from the viewpoint of allowing the effects of the present invention to be more favorably obtained. If the strain at the inflection point P_{V} is as small as less than 0.20%, the ground contact pressure on the ground contact surface is made ununiform to cause deterioration in braking performance, and if the strain is as large as more than 0.90%, the tire is easily warped to cause deterioration in steering stability and ride comfort performance.

In the present invention, the ratio E_{VH}/E_{VL} of the elastic modulus E_{VH} in the high-elastic modulus region to the elastic modulus E_{VL} in the low-elastic modulus region is needed to be 2.0 to 8.0, and is preferably 2.0 to 4.0 from the viewpoint of allowing the effects of the present invention to be more favorably obtained. In a case where both values of the elastic modulus E_{VL} and the elastic modulus E_{VH} are relatively small, and the ratio E_{VH}/E_{VL} of the elastic moduli is less than 2.0, rigidity of the spiral belt is so low that the tire is easily warped during running to result in deterioration in steering stability and ride comfort performance.

In a case where both values of the elastic modulus E_{VL} and the elastic modulus E_{VH} are relatively large and the ratio E_{VH}/E_{VL} of the elastic moduli is less than 2.0, braking performance deteriorates. On the other hand, if the ratio E_{VH}/E_{VL} of the elastic moduli is as large as more than 8.0, the tire is easily warped to result in deterioration in steering stability and ride comfort performance in the case of a too low elastic modulus in the low-elastic modulus region, and rigidity of the spiral belt is excessively increased to result in deterioration in ride comfort performance in the case of a too high elastic modulus in the high-elastic modulus region.

In the present invention, the belt cord taken out from the tire may be any one that satisfies the above conditions with respect to the strain at the inflection point P_{V}, and the ratio E_{VH}/E_{VL} of the elastic modulus E_{VH} in the high-elastic modulus region to the elastic modulus E_{VL} in the low-elastic modulus region, and specific values of the elastic modulus E_{VL} and the elastic modulus E_{VH} are not particularly limited. Particularly, the elastic modulus E_{VL} in the low-elastic modulus region, with respect to the belt cord taken out from the tire, is preferably 30 to 65 GPa, more preferably 35 to 45 GPa. The elastic modulus E_{VL} in the low-elastic modulus region can be in the above range to allow the effects of the present invention to be more favorably obtained.

In the present invention, the belt cord taken out from the tire means a belt cord in a state of being attached with rubber, the belt cord being cut out from the interior of a product tire vulcanized.

In the present invention, the stress-strain curve of the belt cord not covered with rubber before vulcanization preferably has an inflection point P_{U}, more preferably has an inflection point P_{U} in the strain range of 1.60 to 2.20%, particularly in the strain range of 1.80 to 2.00%. The strain at the inflection point P_{U} can be in the above range to make the ground contact pressure on the ground contact surface uniform, resulting in improvement in braking performance, and allowing steering stability and ride comfort performance to be retained without warpage of the tire.

In the present invention, the ratio E_{UH}/E_{UL} of the elastic modulus E_{UH} in the high-elastic modulus region of more than the inflection point P_{U}, to the elastic modulus E_{UL} in the low-elastic modulus region of the inflection point P_{U} or less, with respect to the belt cord not covered with rubber before vulcanization, is preferably 20 to 32, more preferably 26 to 32. The ratio E_{UH}/E_{UL} of the elastic moduli can be in the above range to allow the effects of the present invention to be more favorably obtained.

A specific structure of the belt cord in the present invention is not particularly limited, a twisted cord formed by twisting a plurality of steel filaments, particularly shaped steel filaments can be used, and, for example, a steel cord 100 of a 1 × 5 structure, formed by twisting shaped five steel filaments 101, in which the cross-section structure is illustrated in FIG. 2, can be suitably used.

The diameter of the belt cord in the present invention, in which the belt cord is in a state of being not covered with rubber before vulcanization, is suitably 0.59 to 0.71 mm, more suitably 0.64 to 0.69 mm. If the diameter of the belt cord is small, the strain at the inflection point P_{V}, of the belt cord taken out from the tire, has a risk of being too small, and if the diameter of the belt cord is large, the strain at the inflection point P_{V}, of the belt cord taken out from the tire, has a risk of being too large.

Furthermore, the twisting pitch in the belt cord in the present invention, in which the belt cord is in a state of being not covered with rubber before vulcanization, is suitably 5.2 to 8.8 mm, more suitably 5.5 to 7.5 mm. The twisting pitch in the belt cord can be in the above range to allow the inflection point and the elastic moduli of the belt cord to be optimal values, making the ground contact pressure on the ground contact surface more uniform and improving braking performance.

Moreover, the shaping height of the steel filaments in the belt cord in the present invention, in which the belt cord is in a state of being not covered with rubber before vulcanization, is suitably 0.70 to 0.80 mm, more suitably 0.71 to 0.74 mm. If the shaping height of the steel filaments is small, the amount of shaping is small to cause a risk of too small strain at inflection point P_{V} of the belt cord taken out from the tire, and if the shaping height is large, the amount of shaping is large to cause a risk of too large strain at inflection point P_{V} of the belt cord taken out from the tire.

In the motorcycle tire of the present invention, a belt cord satisfying the above conditions is used in the spiral belt 2. The spiral belt 2 is formed by winding the belt cord in a spiral manner in the tire circumferential direction, and the tire circumferential direction mentioned here means one substantially parallel with a tire equatorial plane CL. The cord count in the belt cord in the spiral belt 2 is not particularly limited, and can be, for example, 9 to 22/25 mm.

The motorcycle tire of the present invention may be any one satisfying the above conditions with respect to the belt cord of the spiral belt 2, the details of any other tire structure and a material used are not particularly limited, and, for example, the following configuration can be adopted.

The carcass 1 is composed of at least one carcass ply, and is formed with relatively highly-elastic textile cords being aligned in parallel with each other. The number of carcass plies may be one or two, or may be three or more. In an example illustrated, two carcass plies are placed. Both end portions of each of the carcass plies may be engaged with being folded back around a bead core 3 embedded in each of the bead portions 13 from the inside to the outside of the tire or may be engaged with being sandwiched from both sides by a bead wire, at each of the bead portions 13, and any securing method may be used.

At least one of the spiral belt 2 can be placed, or two or more thereof may be placed. In an example illustrated, one of the spiral belt 2 is placed.

In the motorcycle tire of the present invention, a bead filler 4 can be placed outside in the tire radial direction of the bead core 3, and an inner liner not illustrated can be placed in the innermost layer of the tire.

The tire 10 illustrated is a front tire, but the tire of the present invention can be applied to both of motorcycle front tire and rear tire, and can also be applied to both tires of a radial structure and a bias structure.

### EXAMPLES

Hereinafter, the present invention is more specifically described with reference to specific Examples.

### (Example 1)

A motorcycle front tire of a tire size of 120/600R17, having a structure illustrated in FIG. 1, was produced. This tire included one spiral belt 2 in which a carcass 1 made of two carcass plies served as a skeleton, and a belt cord satisfying the following conditions shown in Table below was formed outside in the tire radial direction with being wound in a spiral manner in the tire circumferential direction.

The two carcass plies were reinforced by ply cords (material: polyamide) arranged so as to be mutually crossed at a cord angle of ± 69° to a tire equatorial plane CL. The cord count in the belt cord in a tire ground contact region in the spiral belt was 13/25 mm.

### (Example 2 and Comparative Examples 1 to 5)

Each test tire of Example 2 and Comparative Examples 1 to 5 was produced in the same manner as in Example 1 except that conditions of the belt cord used in the spiral belt were changed as shown in the table below.

### (Evaluation of braking performance)

An image of the ground contact surface during loading of a certain pressure on each tire in the perpendicular direction was analyzed, and a ground contact pressure distribution was evaluated and adopted as an index of braking performance. A smaller variation of the ground contact pressure distribution means more favorable braking performance. A case where the variation of the ground contact pressure distribution was at a non-problematic level in practical use was evaluated as "Good", and a case where the variation was at a problematic level was evaluated as "Poor".

### (Evaluation of steering stability and ride comfort performance )

Each test tire of Example 1 and Comparative Examples 1 to 4 was mounted to a rim of a rim size of MT 3.50 × 17, charged with an internal pressure of 230 kPa, and fitted to a commercially available motorcycle. The rear tire used here was a commercially available tire. This motorcycle was subjected to actual sensory evaluation by a test rider, and the rigidity feeling was evaluated under the assumption that Comparative Example 1 was Score 100. A higher score means more favorable performance, and a case of Score 85 or more corresponds to an acceptable level in practical use. Here, evaluation of steering stability and ride comfort performance of the test tire of Example 2 was predicted based on various physical properties described in Table 1, and measurement results of other Examples and Comparative Examples. The test tire of Comparative Example 5 was not evaluated about steering stability and ride comfort performance because braking performance was evaluated as "Poor".

**[Table 1]**

| | | Example 1 | Example 2 | Comparative Example 1 | Comparative Example 2 | Comparative Example 3 | Comparative Example 4 | Comparative Example 5^{*4} |
|---|---|---|---|---|---|---|---|---|
| Cord structure | | 1 × 5 × 0.21 mm | 1 × 5 × 0.21 mm | 1 × 5 × 0.21 mm | 1 × 5 × 0.21 mm | 1 × 5 × 0.21 mm | 1 × 5 × 0.21 mm | 3 × 4 × 0.17 mm |
| Cord diameter (mm)^{*1} | | 0.65 | 0.64 | 0.60 | 0.87 | 0.69 | 0.70 | 0.89 |
| Filament diameter (mm) | | 0.21 | 0.21 | 0.21 | 0.21 | 0.21 | 0.21 | 0.17 |
| Twisting pitch (mm)^{*1} | | 6.0 | 7.0 | 9.0 | 9.0 | 5.0 | 6.0 | Strand 2.0(S) |
| | | | | | | | | Cord 5.0(S) |
| Twisting angle (degrees) | | 15.41 | 13.87 | 12.39 | 18.47 | 18.52 | 16.39 | 16.82 |
| Filament shaping height (mm)^{*1} | | 0.74 | 0.76 | 0.84 | 1.13 | 0.74 | 0.77 | 0.87 |
| Disassembled cord ^{*2} | Strain (%) in inflection point Pv | 0.43 | 0.39 | 0.14 | 2.92 | 1.70 | 0.89 | 0.16 |
| | Elastic modulus E_{VL} (GPa) in low-elastic modulus region | 42.6 | 50.5 | 133.0 | 2.2 | 10.7 | 17.2 | 42.9 |
| | Elastic modulus E_{VH} (GPa) in high-elastic modulus region | 126.5 | 103.8 | 164.0 | 146.3 | 125.2 | 147.6 | 103.8 |
| | E_{VH}/E_{VL} | 3,0 | 2.1 | 1.2 | 66.5 | 11.7 | 8.6 | 2.4 |
| Greige cord ^{*3} | Strain (%) at inflection point P_{U} | 1.87 | 1.84 | 1.52 | 4.59 | 3.06 | 2.42 | 1.20 |
| | Elastic modulus E_{UL} (GPa) in low-elastic modulus region | 6.6 | 5.7 | 4.6 | 0.8 | 2.6 | 5.5 | 4.2 |
| | Elastic modulus E_{UH} (GPa) in high-elastic modulus region | 176.0 | 181.6 | 187.0 | 164.7 | 159.9 | 170.7 | 117.1 |
| | E_{UH}/E_{UL} | 26.8 | 31.9 | 40.7 | 205.9 | 61.5 | 31.0 | 27.9 |
| Evaluation of braking performance | | Good | Good | Poor | Good | Good | Good | Poor |
| Evaluation of steering stability/ride comfort performance | | 85 | 90 | 100 | 75 | 60 | 75 | - |

| | | | | | | | | |
|---|---|---|---|---|---|---|---|---|
| *1) diameter of and twisting pitch in belt cord not covered with rubber before vulcanization, and shaping height of steel filaments in belt cord not covered with rubber before vulcanization. *2) belt cord taken out from tire. *3) belt cord not covered with rubber before vulcanization. *4) cord of Comparative Example 5 has structure obtained by twisting three strands formed by twisting four steel filaments at twisting pitch of 2.0 mm with S-twisting, at twisting pitch of 5.0 mm with S-twisting. | | | | | | | | |

As clear as shown in the above Table, a motorcycle tire that achieves an enhancement in braking performance without any loss of steering stability and ride comfort performance can be realized by using, as the belt cord of the spiral belt, one satisfying condition associated with the inflection point P_{V} and the elastic modulus ratio E_{VH}/E_{VL}.

### DESCRIPTION OF SYMBOLS

1 carcass
2 spiral belt
3 bead core
4 bead filler
10 motorcycle tire
11 tread portion
12 sidewall portion
13 bead portion
100 steel cord
101 steel filament

## Claims

1. A motorcycle tire comprising a spiral belt in which a carcass striding between paired bead portions and extending in a toroid manner serves as a skeleton and a belt cord is formed outside in a tire radial direction of the carcass with being wound in a spiral manner in a tire circumferential direction, wherein
not only a stress-strain curve of the belt cord taken out from the tire has an inflection point P_{V} in the strain range of 0.20 to 0.90%,
but also a ratio E_{VH}/E_{VL} of an elastic modulus E_{VH} in a high-elastic modulus region of more than the inflection point P_{V} to an elastic modulus E_{VL} in a low-elastic modulus region of the inflection point P_{V} or less, with respect to the belt cord taken out from the tire, is 2.0 to 8.0.

2. The motorcycle tire according to claim 1, wherein the stress-strain curve of the belt cord not covered with rubber before vulcanization has an inflection point P_{U} in the strain range of 1.60 to 2.20%.

3. The motorcycle tire according to claim 1 or 2, wherein not only the stress-strain curve of the belt cord not covered with rubber before vulcanization has an inflection point P_{U}, but also a ratio E_{UH}/E_{UL} of an elastic modulus E_{UH} in a high-elastic modulus region of more than the inflection point P_{U}, to an elastic modulus E_{UL} in a low-elastic modulus region of the inflection point P_{U} or less, with respect to the belt cord not covered with rubber before vulcanization, is 20 to 32.

4. The motorcycle tire according to claim 1, wherein the elastic modulus E_{VL} in the low-elastic modulus region, with respect to the belt cord taken out from the tire, is 30 to 65 GPa.

5. The motorcycle tire according to claim 1, wherein the belt cord is formed by twisting a plurality of steel filaments, and a twisting pitch in the belt cord not covered with rubber before vulcanization is 5.2 to 8.8 mm.

6. The motorcycle tire according to claim 1 or 5, wherein a diameter of the belt cord not covered with rubber before vulcanization is 0.59 to 0.71 mm.

7. The motorcycle tire according to claim 1, wherein the belt cord is formed by twisting a plurality of shaped steel filaments, and a shaping height of the steel filaments in the belt cord not covered with rubber before vulcanization is 0.70 to 0.80 mm.
